Europäisches Patentamt

European Patent Office

Office européen des brevets

(11) Publication number: **0 378 416**
**A2**

## EUROPEAN PATENT APPLICATION

(21) Application number: **90300331.7**

(22) Date of filing: **11.01.90**

(51) Int. Cl.⁵: **G06F 13/12**

(30) Priority: **13.01.89 US 297711**

(43) Date of publication of application:
**18.07.90 Bulletin 90/29**

(84) Designated Contracting States:
**DE FR GB**

(71) Applicant: **International Business Machines
Corporation
Old Orchard Road
Armonk, N.Y. 10504(US)**

(72) Inventor: **Irwin, John William
8011 El Dorado Drive
Austin, Texas 78737(US)**
Inventor: **Peterson Milford John
4401 Cavern Springs Road
Austin, Texas 78727(US)**
Inventor: **Mathis, Joseph Richard
725 Shady Hollow Drive
Georgetown, Texas 78628(US)**

(74) Representative: **Bailey, Geoffrey Alan
IBM United Kingdom Limited Intellectual
Property Department Hursley Park
Winchester Hampshire SO21 2JN(GB)**

(54) **Channel state bits.**

(57) An I/O channel is described which contains multiple clocking partitions and is controlled by the main system processor over an I/O bus that is common with other I/O channels, thus decoupling the channel from continuous processor monitoring. A dual set of state bits convey to the main processor over an asynchronous boundary the state of the channel interface and the link. The origin of the channel interface state bit is a function of whether the main processor is issuing a new command. Link state bits are real time or latched as a function of channel state. Link state values have been assigned using Gray code for assuring accurate determination of link state at the instant of failure, to avoid false readings at state transitions due to asynchronous internal channel clocking.

FIG. 3

## CHANNEL STATE BITS

This invention relates to a technique for using state bits to convey state information about an I/O channel to a main system processor controlling the channel.

In the usual Input Output (I/O) channel that contains a dedicated microprocessor, that microprocessor intimately controls the state changes of the channel and there is no uncertainty between the perception of the microcode and the actual state of the hardware at any instant.

It is not uncommon to find attached to a public, or shared, I/O bus an I/O channel with no dedicated processor. However, it is usual in such configurations to find a channel performing relative simple operations without intimate processor control.

When in a high performance data processing environment a main processing engine is used to control an I/O channel, more intimate processor control is needed. There is required a much closer processor - channel relationship than is typical.

In a data processing system in which the main system processor is separated from the channel hardware by a storage controller and an I/O bus which may be shared with any number of other channels of various types, some technique is required in the channel for enabling software running in the main processing engine to accurately determine the current hardware state of the channel, responses to commands issued to the channel, and the hardware state which may have existed in the channel when an asynchronous event occurred while the channel was in independent operation.

The channel is detached from the main processing engine at the time many internal channel hardware state changes and most link state changes occur. Occasionally, interrupts may be disabled and the main processor may poll the channel to determine the current state of the hardware and link. Since the main processor is delayed until the state can be returned, the state information available to the processor may not accurately reflect channel status at the appropriate point in time.

Accordingly the present invention provides a data processing system comprising:
a main system processor;
an I/O channel controlled by said main processor, and capable of performing operations asynchronously to said main processor;
a communications link attached to said channel;
a shared I/O bus connecting said channel and said main processor; and
means in said channel for indicating to said main processor across an asynchronous boundary, the status of interfaces between said channel and said main processor and between said channel and said communications link.

The present invention also provides a data processing system comprising:
a main system processor;
a communications link;
an I/O channel, controlled by said main processor, attached to said link, and capable of performing operations asynchronously to said main processor;
a first finite state machine in said channel for controlling the interface between said main system processor and said channel;
a second finite state machine in said channel for controlling the interface between said channel and said communications link;
a shared I/O bus connecting said channel and said main processor; and
means in said channel for indicating to said main processor across an asynchronous boundary, states of interfaces between said channel and said main processor and between said channel and said communications link, as generated by said first and second state machines.

The present invention also provides a method of presenting to a main processor across an asynchronous boundary indicators of status of an I/O channel and a communications link in a data processing system including said main processor controlling said I/O channel connecting said main processor to a communications link, comprising:
continuously updating said indicators of channel status; and
continuously updating said indicators of link status only while said channel is working.

This invention deals with a minimal I/O channel design in which the channel functionality that is usually provided by a dedicated microprocessor is, instead, provided by the main processing engine of the host computer. The channel hardware has a limited functionality to perform certain independent sequences. In the event of any asynchronous event or any error occurrence, the main system processor is interrupted to provide a new channel setup to deal with that event.

The state of the channel is passed back to the main system processor in a status word which is returned:
o in response to every command issued to the channel
o when the main processor reads channel status while the channel is running
o when the main processor reads channel status after the channel has stopped and interrupted

Within the status word are two separate but related sets of state bits which are the subject of this invention, the Processor Interface State bits and the Link Interface State bits.

The invention provides for the generation of state bits in the channel to enable presentation to the main processing engine indicators reflecting channel status, both current state and at the time channel operation stopped.

In order that the invention may be fully understood a preferred embodiment thereof will now be described, by way of example only, with reference to the accompanying drawings in which:-

Fig. 1 is a block diagram of a system including a channel embodying the present invention;

Fig. 2 is a block diagram of I/O channel 4 of Fig. 1;

Fig. 3 represents the clocking organization of I/O channel 4 of Fig. 1;

Fig. 4 is a diagram illustrating the states of processor state machine 43 of Fig. 2;

Fig. 5 is a transition diagram of the states of link state machine 45 of Fig. 3 and transition paths therebetween; and

Fig. 6 shows causes of state transitions of state machine 45 of Fig. 3.

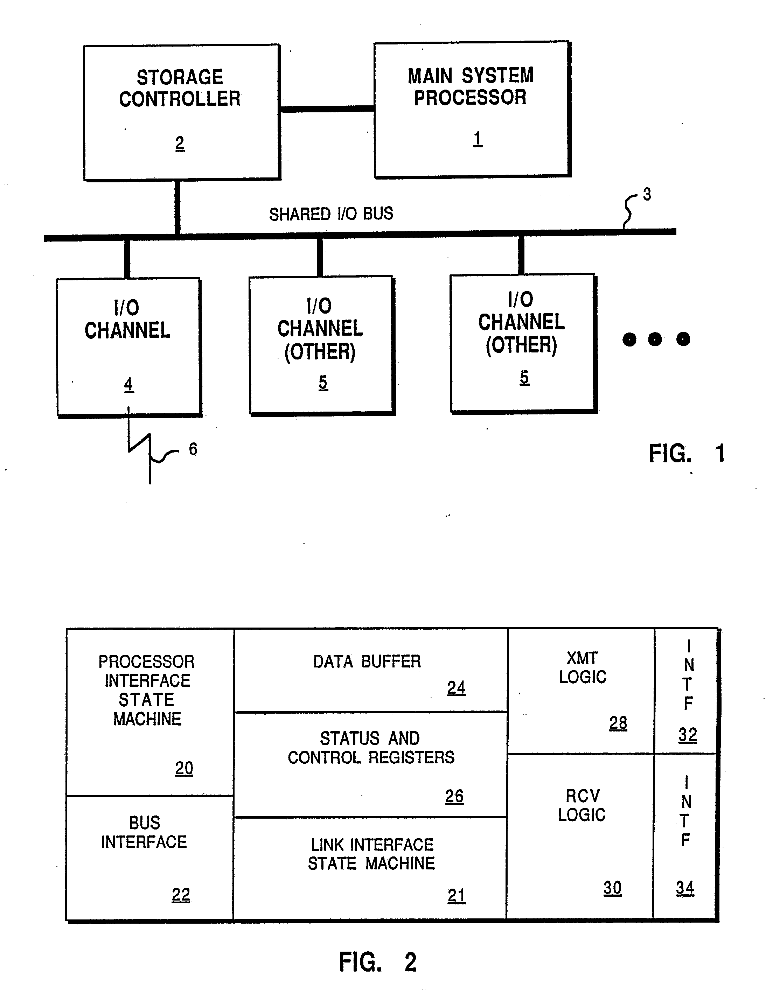

Refer now to Fig. 1. Fig. 1 is a schematic block diagram of a system incorporating a preferred embodiment of the present invention. The main system processor 1 is connected to a storage controller 2, which is connected to a shared I/O bus 3. Also connected along I/O bus 3 are I/O channels 4 and 5. The rest of this description will refer only to I/O channel 4, but the operation of the other I/O channels 5 may be the same. In this preferred embodiment, I/O channel 4 has an interface to a communications link 6.

The major logical partitions in I/O channel 4, necessary to an understanding of the present invention, are shown in the block diagram of Fig. 2. Included are a processor interface state machine 20, a link interface state machine 21, an interface 22 to shared I/O bus 3 (Fig. 1), data buffer 24, status and control registers 26, transmit logic 28, receive logic 30, and interfaces 32 and 34 to communications link 6 (Fig. 1).

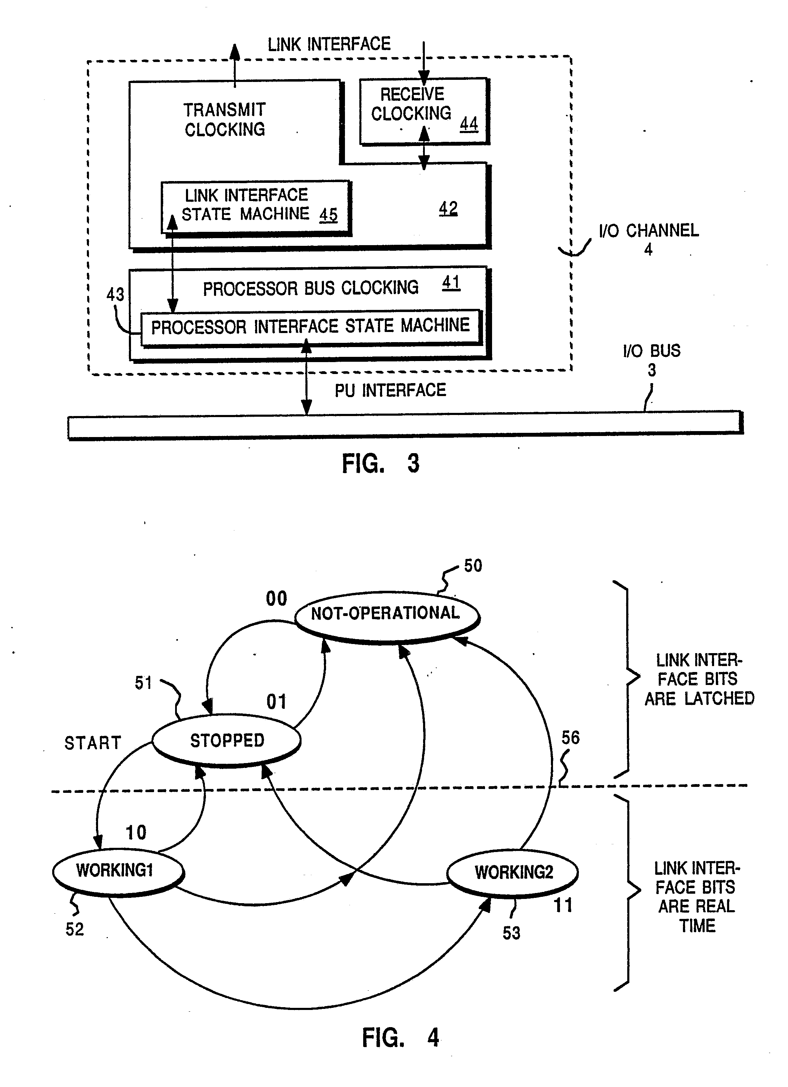

Fig. 3 depicts the clocking organization of I/O channel 4. At the top of the figure is the communications link interface, the state of which is reflected in the Link Interface State bits. At the bottom of the diagram is the master processor unit (PU) bus interface, the condition of which is reflected in the PU Interface State bits.

Channel 4 contains three logic partitions, each controlled by separate clocks. Processor bus clocking partition 41 runs on the master processor clock frequency. Transmit clocking partition 42 and receive clocking partition 44 run on clocks that are nominally the same frequency but have no fixed phase relationship. The frequency of the transmit and receive partition clocks is different from that of the master processor clock, which frequency is a master processor model dependent variable.

Information passing between any two of separately clocked partitions 41, 42, 44 must be synchronized with the receiving partition clock.

State machine 43 is the main control of I/O channel 4, and is a four-state finite state machine. The state latches of the state machine produce the processor interface state bits. Fig. 4 depicts the four States of the state machine 43 that run the channel. They are:

o NOT-OPERATIONAL 50

The channel hardware explicitly enters this state from Stopped state upon command from the main processor and implicitly enters this state immediately after power on and from any state after certain serious errors.

If the channel is in the non-operational state, the registers in the channel by which the main processor configures the channel may be changed. If the channel is not operational, a special command must be issued to the hardware to make it operational. Any other command is rejected. The channel goes non-operational after certain errors.

o STOPPED 51

The channel explicitly enters this state upon command from the main processor and implicitly enters this state after completing the execution of commands. If the channel is in Stopped state, the registers configuring the channel may be changed.

o WORKING1 52

The channel enters this state only upon receipt of an explicit Start command from the main processor. If the channel is in this state, any access to the channel registers results in an error since these registers are in use by the channel.

o WORKING2 53

The channel enters this state only from Working1 state upon receiving a Stop command from main processor 1. If the channel is in this state, any access to the channel registers results in an error since these registers are in use by the channel.

Dotted line 56 graphically represents the division between working and non-working states.

The binary numbers by each State
00 Not-Operational
01 Stopped
10 Working1
11 Working2
are the values placed in predetermined bits of a status register located in block 26 of Fig. 2, with every state change, for access by main processor 1.

These PU interface bits are returned in response to each command issued by main processor 1 to channel 4. When responding to a command, these bits define the state into which the state controls of the channel will enter in response to the command. When sampled any other time, these bits reflect the current state of the channel. In other words, when responding to a command, the PU Interface State bits are derived from combinatorial logic and indicate the condition that main state control 43 will assume after the command is executed. Since main processor 1 is effectively stopped while waiting for the command response, saving clock periods is very important. When not responding to a command, the PU Interface State bits reflect the actual state of state machine 43 which has been clocked across the asynchronous interface between the channel and the shared I/O bus.

For instance, if due to a device driver (main processor software) error, a command is issued when the channel is in Working State or issued to an incorrect channel address, the channel enters Not-Operational state. The status word that is returned in response to the improper command contains error bits and the PU Interface State bits indicate Not-Operational. In this case, Not-Operational is not the current state of state machine 43, but rather the state that will be entered by state machine 43 several clock cycles later. If the device driver polls the channel by reading the status register, the PU Interface State bits contain a snapshot of the state of state machine 43 at the time of the sample.

The recovery actions that software in main processor 1 must execute in order to recover from link errors depends on the exact state that the channel was in when the error occurred. With a dedicated channel microprocessor, this would be a trivial matter since the microprocessor would monitor the link and control the state changes. When the channel is controlled by a remote processor, the channel is always in Stopped or Not-Operational state when an error is reported back to that processor. Many link state changes may have occurred between the issuance of a command and the occurrence of the error. It is therefore important that the channel should be able to remember its exact last link interface state before entering Stopped or Non-Operational mode due to an error.

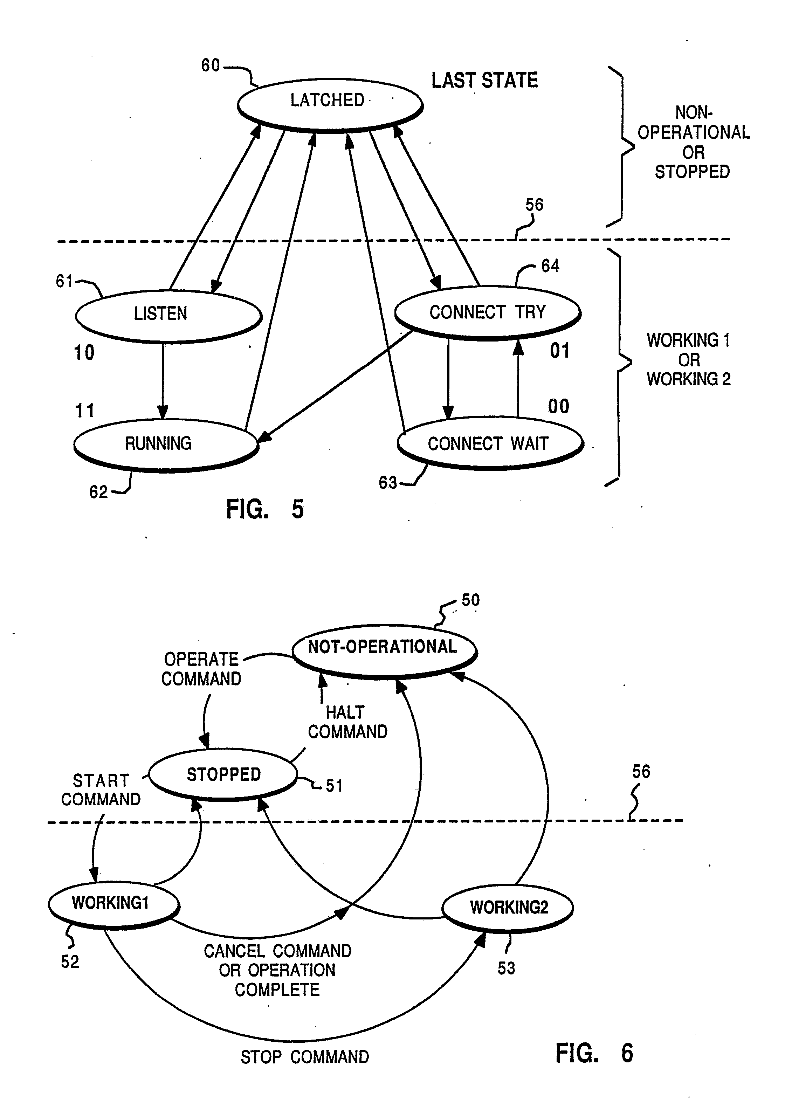

Refer now to Fig. 5, a transition diagram showing the States of link interface state machine 45 and the possible transition paths between them. In order to reliably recover from link errors, main processor software must determine which one of the following four States state machine 45 was in when the error occurred. Whenever processor interface State machine 43 experiences a state transition from working to non-working (across dotted line 56), one of the below listed link states is latched into Last State 60.

o LISTEN 61

The channel is passively listening and there is established connection. No link error recovery is required.

o RUNNING 62

A connection has been established. Initiation of the connection may have been by either party. There may or may not be a connection established depending upon where the error occurred. Recovery must presume that a connection exists.

o CONNECT WAIT 63

The channel has received a Busy reply to a connect frame on the link and is waiting for a predefined period before retrying. No connection exists. No link error recovery is required.

o CONNECT TRY 64

The channel has transmitted a connect frame on the link and is waiting for a response. There may or may not have been a connection established depending upon where the connect frame was lost. Recovery must presume that a connection exists.

The binary numbers adjacent link states are the bit values returned to main processor 1 in the status register.

The meaning of each value is listed below.
00 Connect Wait
01 Connect Try
10 Listen
11 Running

Notice that no transition in Fig. 5 involves a change in more than one link State bit. Since these bits can be read in real time by main processor 1 and they are advanced by a clock asynchronous to that of the main processor, it is possible that they may be read during a State transition. Therefore, to prevent the return of an incorrect value, they are specifically coded so that only one of the two bits changes at each boundary as the channel advances through its internal, hardwired program. This form of coding is known as Gray code. In this exemplary embodiment, two bits are sufficient for indicating the four possible States. Those skilled in the art however, will understand that in a case where there are a greater number of conditions to be represented that a greater number of bits may be set aside for this purpose, and as a matter of design choice may designate values in accordance with Gray code principles.

Viewing Figs. 3 - 5, it can be seen that through the use of Gray code, these link State bits can be passed across an asynchronous clock boundary between transmit clocking 42 and processor bus clocking 41 without need for synchronization. A sampling by main processor 1 occurring at the time these state bits are changing will get either the old or the new state and never an erroneous state. That is, Last State 60 is presented if the PU State is Not-Operational or Stopped. This technique advantageously saves several clock periods at each clocking boundary each time these bits are passed to I/O bus 3. Since main processor 1 is effectively stopped while waiting for the status response, such saving of clock periods is very important.

When an error condition stops the channel, there is a time lapse between error occurrence and the resultant sampling of status by main processor 1. In order that main processor 1 can determine the full State of the link and properly break any contingent connections, it is necessary that it determine the exact State of the link when the error occurred. The error causes state machine 43 to enter either Stopped or Not-Operational state, thereby causing the link state bits to be latched in the state existing at the instant of the error. The Stopped or Not-Operational indication then shuts down the channel operation. The channel then remains quiescent until the next Start command is issued to the channel. The Link Interface State bits remain latched until the next Start command.

Software in main processor 1 must take into account the fact that when channel 4 is first made operational after power on reset, the link state bits have no meaning until the channel has been Started at least once.

Refer to Fig. 6 which is very similar to Fig. 4 except that the PU state bit values are not shown. Commands and conditions causing state transitions have been added. Thus, it can be seen that when main processor 1 issues a command, the Link Interface State bits are not unlatched until main state control 43 have actually advanced to either Working State 52 or 53. Since this advance takes several clock cycles, it is clear that Link Interface State bits always reflect the last latched State in response to a Start command. It is also clear that these bits have no meaning until the first Start command after power on reset has been issued.

## Claims

1. A data processing system comprising:
a main system processor (1);
an I/O channel controlled by said main processor (4), and capable of performing operations asynchronously to said main processor;
a communications link (6) attached to said channel;
a shared I/O bus (3) connecting said channel and said main processor; and
means in said channel for indicating to said main processor across an asynchronous boundary, the status of interfaces between said channel and said main processor and between said channel and said communications link.

2. A data processing system as claimed in Claim 1 wherein said means for indicating include:
a first set of bits whose values represent a plurality of channel processor interface working and non-working states; and
a second set of bits whose values represent a plurality of channel link interface states.

3. A data processing system as claimed in Claim 2 wherein:
said second set of bits values are continuously reset in real time or held to a previous value, as a function of values set in said first set of bits, indicating working or non-working states, respectively.

4. A data processing system as claimed in Claim 2 or Claim 3, wherein:
said first set of bits are set through use of combinatorial logic in response to a command from said main processor.

5. A data processing system as claimed in any of Claims 2 to 4, wherein:
said second set of bits are Gray coded.

6. A data processing system comprising:
a main system processor (1);
a communications link (6);
an I/O channel (4), controlled by said main processor, attached to said link, and capable of performing operations asynchronously to said main processor;
a first finite state machine (20) in said channel for controlling the interface between said main system processor and said channel;
a second finite state machine (21) in said channel for controlling the interface between said channel and said communications link;

a shared I/O bus (3) connecting said channel and said main processor; and

means in said channel for indicating to said main processor across an asynchronous boundary, states of interfaces between said channel and said main processor and between said channel and said communications link, as generated by said first and second state machines.

7. A data processing system as claimed in Claim 6 wherein said means for indicating include:

a first set of bits whose values represent a plurality of channel processor interface working and non-working states;

a second set of bits whose values represent a plurality of channel link interface states; and

means for latching said second set of bits when said first set of bits represent a non-working state.

8. A method of presenting to a main processor (1) across an asynchronous boundary indicators of status of an I/O channel (4) and a communications link (6) in a data processing system including said main processor controlling said I/O channel connecting said main processor to a communications link, comprising:

continuously updating said indicators of channel status; and

continuously updating said indicators of link status only while said channel is working.

STORAGE CONTROLLER
2

MAIN SYSTEM PROCESSOR
1

SHARED I/O BUS 3

I/O CHANNEL
4

I/O CHANNEL (OTHER)
5

I/O CHANNEL (OTHER)
5

6

FIG. 1

PROCESSOR INTERFACE STATE MACHINE
20

DATA BUFFER
24

STATUS AND CONTROL REGISTERS
26

XMT LOGIC
28

I N T F
32

BUS INTERFACE
22

LINK INTERFACE STATE MACHINE
21

RCV LOGIC
30

I N T F
34

FIG. 2

FIG. 3

FIG. 4

FIG. 5

FIG. 6